Europäisches Patentamt

European Patent Office

Office européen des brevets

(19)

(11) **EP 1 123 424 B1**

(12) **EUROPÄISCHE PATENTSCHRIFT**

(45) Veröffentlichungstag und Bekanntmachung des Hinweises auf die Patenterteilung:
**10.04.2002  Patentblatt 2002/15**

(21) Anmeldenummer: **99970698.9**

(22) Anmeldetag: **27.09.1999**

(51) Int Cl.⁷: **C23C 18/16**, B01D 61/44

(86) Internationale Anmeldenummer:
**PCT/DE99/03186**

(87) Internationale Veröffentlichungsnummer:
**WO 00/23637 (27.04.2000 Gazette 2000/17)**

(54) **VERFAHREN UND VORRICHTUNG ZUM ELEKTRODIALYTISCHEN REGENERIEREN EINES STROMLOSEN METALLABSCHEIDEBADES**

METHOD AND DEVICE FOR ELECTRODIALYTIC REGENERATION OF AN ELECTROLESS METAL DEPOSITION BATH

PROCEDE ET DISPOSITIF POUR LA REGENERATION ELECTRODIALYTIQUE D'UN BAIN DE DEPOT METALLIQUE SANS COURANT

(84) Benannte Vertragsstaaten:
**AT BE CH CY DE DK ES FI FR GB GR IE IT LI LU MC NL PT SE**

(30) Priorität: **15.10.1998  DE 19849278**

(43) Veröffentlichungstag der Anmeldung:
**16.08.2001  Patentblatt 2001/33**

(73) Patentinhaber: **ATOTECH Deutschland GmbH 10553 Berlin (DE)**

(72) Erfinder:
• **HEYDECKE, Jens**
  **D-13409 Berlin (DE)**
• **BORN, Rainer**
  **D-13435 Berlin (DE)**

• **RICHTERING, Werner**
  **D-14169 Berlin (DE)**
• **BLASCHKE, Manfred**
  **D-10437 Berlin (DE)**
• **KRAFT, Alexander**
  **D-13086 Berlin (DE)**
• **WÜNSCHE, Maja**
  **D-10409 Berlin (DE)**

(74) Vertreter: **Effert, Bressel und Kollegen Radickestrasse 48 12489 Berlin (DE)**

(56) Entgegenhaltungen:
**EP-A- 0 604 968          EP-A- 0 787 829
DE-C- 4 310 366          US-A- 4 324 629
US-A- 5 419 821**

**Beschreibung**

Die Erfindung betrifft ein Verfahren und eine Vorrichtung zum elektrodialytischen Regenerieren eines stromlosen Metallabscheidebades, insbesondere eines stromlosen Nickelabscheidebades.

Die stromlose Beschichtung von Werkstücken mit Metallen ist seit langem bekannt. Beispielsweise werden aus Kunststoff bestehende Sanitärarmaturen mit Metallschichten versehen, um ein bestimmtes ästhetisches Erscheinungsbild zu erhalten, oder bestimmte aus Metall bestehende Werkstücke, um deren Funktionstüchtigkeit zu verbessern, beispielsweise die Verschleißfestigkeit oder das Korrosionsverhalten. So erhalten mechanisch stark beanspruchte Teile im Maschinenbau widerstandsfähige Überzüge aus einer weitgehend amorphen Nickel/Phosphor-Legierungsschicht, um die Abriebfestigkeit, beispielsweise von Lagerschalen an beweglichen Teilen, zu erhöhen. Bei der Erdölförderung im off-shore-Bereich verwendete Metallteile werden mit einer derartigen Nikkel/Phosphorschicht überzogen, um die Materialbeständigkeit gegen chemische Einflüsse zu verbessern.

Die stromlose Beschichtung mit Metallen beruht auf einem autokatalytischen Prozeß, bei dem gelöste Metallionen mittels eines in der Abscheidelösung befindlichen Reduktionsmittels zum Metall reduziert und auf dem zu beschichtenden Werkstück abgeschieden werden. Oft werden in diesem Fall weitere Komponenten in die Metallschicht eingebaut, beispielsweise Phosphor. Neben Nikkel kann mit diesem Verfahren auch Kupfer abgeschieden werden.

Zur Abscheidung von Nickel/Phosphorschichten können grundsätzlich elektrolytische und stromlose Verfahren eingesetzt werden. Elektrolytische Verfahren sind zwar leichter handhabbar; sie weisen jedoch den Nachteil auf, daß gleichmäßig dicke Schichten nur dann erhalten werden können, wenn die zu beschichtenden Teile eine einfache Geometrie aufweisen. Die elektrolytische Metallisierung von Werkstücken, die eine komplexe Geometrie aufweisen, beispielsweise Wölbungen, Löcher oder Hinterschneidungen, führt zur ungleichmäßiger Schichtdicke und daher in vielen Fällen zu nicht vertretbaren lokalen Schwankungen des Beschichtungsergebnisses. Außerdem weisen die stromlos abgeschiedenen Metallschichten häufig günstigere mechanische Eigenschaften auf als elektrolytisch abgeschiedene Metallschichten. Aus diesem Grunde werden sehr häufig stromlose Verfahren zur Beschichtung eingesetzt.

Die stromlose Metallabscheidung wird nachfolgend am Beispiel der stromlosen Nickelabscheidung mit gleichzeitigem Einbau von Phosphor in die Schicht dargestellt. Hierbei wird beispielsweise eine Abscheidelösung eingesetzt, die Natriumhypophosphit als Reduktionsmittel für Nickelionen sowie Nickelionen, zum Beispiel als Nickelsulfat, enthält. Die Abscheidereaktion verläuft nach folgender Reaktionsgleichung:

$$NiSO_4 + 6\ NaH_2PO_2 \rightarrow Ni + 2\ H_2 + 2\ P + 4\ NaH_2PO_3 + Na_2SO_4$$

Bei dieser Reaktion werden also ständig gelöste Nickel- und Hypophosphitionen verbraucht, während die Konzentration von Orthophosphit ($H_2PO_3^-$) als Oxidationsprodukt zunimmt. Weiterhin reichern sich die Gegenionen der Nickel-Kationen und Hypophosphit-Anionen in Form von Na2SO4 an.

Daher weisen derartige Verfahren den Nachteil auf, daß die Verfahrensführung in vielen Fällen kompliziert ist und eine Vielzahl von Überwachungvorgängen durchgeführt werden muß, um konstante Abscheidungsbedingungen zu erreichen. Darüber hinaus ist die Lebensdauer der stromlosen Abscheidungsbäder begrenzt. Bei der Metallabscheidung werden das Reduktionsmittel und die Metallionen verbraucht, die während der Durchführung des Verfahrens kontinuierlich nachgeführt werden müssen, um einen annähernd konstanten Gehalt an verfügbarem Reduktionsmittel und verfügbaren Metallionen innerhalb einer schmalen Bandbreite zur Verfügung zu stellen. Da das Reduktionsmittel und die die Metallionen enthaltenden Salze bei der Abscheidereaktion ferner Reaktionsprodukte hinterlassen, die sich in dem Abscheidebad anreichern, ist die Lebensdauer des Bades zwangsläufig begrenzt. Beispielsweise werden die Metallionen in Form von Salzen zum Bad zugegeben, so daß sich störende Anionen, wie beispielsweise Sulfationen, im Bad anreichern. Gleiches gilt auch für Orthophosphitionen ($H_2PO_3^-$), die sich durch Oxidation von Hypophosphitionen im Bad bilden.

Das Alter eines Bades wird üblicherweise in Metall-turn-over (MTO) angegeben. 1 MTO entspricht der Menge an abgeschiedenem Metall aus dem Bad, das der ursprünglich eingesetzten Konzentration der Metallionen im Bad, jeweils bezogen auf das Gesamtvolumen des Bades, entspricht. Im allgemeinen erreichen die Abbauprodukte im Bad nach 6 bis 10 MTO eine so hohe Konzentration, daß die Qualität und die Abscheidegeschwindigkeit des Metalls nicht mehr innerhalb der tolerierbaren Bereiche liegen. Daher werden Bäder mit einem derartigen Alter nicht weiterverwendet. Es muß ein neues Bad angesetzt werden, und das verbrauchte muß verworfen werden. Nachteilig ist, daß die notwendige Entsorgung der Bäder und der erforderliche Neuansatz von frischen Bädern zu hohen Kosten und erheblichen Umweltbelastungen führen. Deshalb wurden verschiedene Verfahren vorgeschlagen, mit denen die Standzeit derartiger Bäder verlängert werden kann.

In US-A-5,221,328 wird zur Verlängerung der Standzeit von stromlosen Nickelbädern ein Verfahren beschrieben, mit dem in einem Nickel/Phosphor-Abscheidebad entstandenes Orthophosphit als Metallsalz ausgefällt und abgetrennt werden kann. Als Fällungsmittel kommen Yttrium und Lanthanide in Frage. Die hierfür notwendigen Chemikalien sind jedoch recht teuer. Außerdem können im Bad verbleibende gelöste Bestandteile dieser Zusätze die Qualität der Metallüberzüge beeinträchtigen.

Von C.D. Iacovangelo wird in "Plating and Surface Finishing", September 1995, Seiten 77 bis 82, vorgeschlagen, die störende Ausfällung von Nickelorthophosphit durch Zugabe von Komplexbildnern zu verhindern. Dadurch wird die Konzentration an gelösten freien Nickelionen verringert.

Bei dem ENVIRO CP-Verfahren von Firma Martin Marietta, U.S.A. werden die störenden Komponenten im Bad mittels Adsorption an Ionenaustauscherharzen abgetrennt. Zur vollständigen Abtrennung und Regenerierung des Abscheidebades wird ein kompliziertes Verfahren durchgeführt, bei dem mehrere unterschiedliche Ionenaustauschersäulen und Behälter für diverse Prozeßflüssigkeiten benötigt werden.

Von Y. Kuboi und R. Takeshita wird ein elektrodialytisches Verfahren zur Abtrennung der unerwünschten Badkomponenten beschrieben (Electroless Nickel Conference 1989, Proceedings, Prod. Finishing Magazine, 1989, Seiten 16-1 bis 16-15). Bei diesem Verfahren wird das stromlose Nickelbad als sogenanntes Diluat durch eine Elektrodialysezelle geleitet. Der Diluatraum in der Elektrodialysezelle ist hierzu anodenseitig durch eine Anionenaustauschermembran von dem mit der Anode in Kontakt stehenden Anodenraum und kathodenseitig durch eine Kationenaustauschermembran von dem mit der Kathode in Kontakt stehenden Kathodenraum getrennt. Diese beiden letztgenannten Räume werden auch als Konzentraträume bezeichnet. Die im Abscheidebad unerwünschten Sulfat- und Orthophosphitionen werden in den Anodenraum und die unerwünschten Natriumionen, die vom eingesetzten Natriumhypophosphit herrühren, in den Kathodenraum überführt. In Laboratoriumsversuchen hat sich jedoch herausgestellt, daß neben den unerwünschten Sulfat-, Orthophosphit- und Natriumiönen auch die für das Abscheideverfahren wichtigen Badbestandteile, nämlich die Nickel-, Hypophosphitionen und die organischen Komplexbildner (meist Carbonsäuren bzw. deren Anionen) in die Konzentraträume überführt werden.

In DE 43 10 366 C1 wird ein elektrodialytisches Verfahren zur Regenerierung von stromlosen Nickel/Phosphorbädern beschrieben. Das zu regenerierende Nickel/Phosphorbad wird hierzu durch einen Raum in einer Elektrodialysezelle geführt, der sowohl kathodenseitig als auch anodenseitig durch jeweils eine Anionenaustauschermembran von den angrenzenden Räumen abgetrennt ist (Diluatraum). Durch Anlegen eines elektrischen Feldes werden Ortho- und Hypophosphitionen in den anodenseitig zum Diluatraum liegenden Konzentratraum überführt. Diese Lösung wird anschließend in den mit der Kathode in Kontakt stehenden Kathodenraum gefördert. Hypophosphit kann von dort aus durch Überführung wieder in den Diluatraum übertreten, während Orthophosphit an der Kathode zu Hypophosphit reduziert und das entstandene Hypophosphit anschließend ebenfalls in den Diluatraum überführt werden soll. Es hat sich aber in Versuchen herausgestellt, daß diese Reduktionsreaktion tatsächlich nicht stattfindet. Es wird ferner vorgeschlagen, eine Vielzahl der angegebenen Zellen parallel zu schalten. Auch mit dieser Zelle wird nicht der Nachteil behoben, der dem von Y. Kuboi und R. Takeshita beschriebenen Verfahren innewohnt. Außerdem reichern sich in dieser Lösung auch Sulfat- und Natriumionen an.

Auch in US-A-5,419,821 wird ein elektrodialytisches Verfahren zum Regenerieren stromloser Metallisierungsbäder beschrieben. Ähnlich wie in DE 43 10 366 C1 werden Hypophosphit und Orthophosphit über eine Anionenaustauschermembran in einen anodenseitigen Konzentratraum überführt und damit abgetrennt. Auch in diesem Fall wird die anodenseitige Konzentratlösung in den Kathodenraum überführt, so daß Hypophosphit von dort wieder in den Diluatraum gelangen kann. Orthophosphit wird durch Zugabe von Magnesium- oder Calciumsalzen zu der Lösung, die diesen Raum durchströmt, ausgefällt und auf diese Weise dem Gesamtprozeß entzogen. Nachteilig ist indes, daß störende Natrium-und Sulfationen aus der Nickelbadlösung nicht entfernt werden können.

Um die Nachteile der vorstehend beschriebenen Verfahren zu beheben, wurde in EP 0 787 829 A1 ein Verfahren zum elektrodialytischen Regenerieren von stromlosen Nickel/Phosphorbädern vorgeschlagen, bei dem das Verfahren in zwei verschiedenen Varianten eingesetzt wird. Dieses Verfahren wird in jeder der beiden Varianten diskontinuierlich betrieben. Die eine Variante stellt ein zweistufiges Verfahren dar, bei dem die verbrauchte Abscheidelösung zunächst in den Diluatraum einer Elektrodialysezelle geleitet wird, die von zwei Konzentraträumen durch eine Anionenaustauschermembran auf der der Anode zugewandten Seite und von einer monoselektiven Kationenaustauschermembran auf der der Kathode zugewandten Seite begrenzt ist. Monoselektive Ionenaustauschermembranen unterscheiden sich von normalen Ionenaustauschermembranen dadurch, daß sie einfach geladene Ionen passieren lassen, nicht jedoch mehrfach geladene Ionen. In der ersten Verfahrensstufe werden dadurch Natrium-, Hypophosphit-, Orthophosphit-, Sulfat- und Carbonsäureanionen in die Nachbarkompartimente überführt, während Nickelionen im Diluatraum verbleiben. Anschließend werden die jeweiligen Lösungen in eine zweite Elektrodialysezelle geleitet, in der ein Konzentratraum zwischen zwei Diluaträumen angeordnet und von diesen anodenseitig durch eine monoselektive Anionenaustauschermembran und kathodenseitig von einer Kationenaustauschermembran abgetrennt ist. In diesem Fall werden die Hypophosphit- und Carbonsäureanionen sowie die Natriumkationen wieder in den Diluatraum überführt, nicht jedoch die Orthophosphit- und Sulfationen. In der Bilanz werden also die Orthophosphit- und Sulfationen entfernt, nicht jedoch die Natriumionen. Da die Ladungsbilanz in jedem einzelnen der Verfahrensschritte gewährleistet ist, kann nicht die gesamte Menge der Orthophosphit- und Sulfationen entfernt werden, da der den im Diluatraum zurückbleibenden Natriumionen entsprechende Anteil an anionischen Gegenionen ebenfalls im Diluatraum zurückbleiben muß. Dadurch wird die Wirksamkeit der Trennung maßgeblich beeinträchtigt.

In der zweiten Variante, die als einstufiges Verfahren ausgebildet ist, wird die Badlösung in den Kathodenraum einer aus drei Elektrolyträumen bestehenden Elektrodialysezelle gegeben, wobei der mittlere Raum von den anderen Räumen anodenseitig durch eine monoselektive Anionenaustauschermembran und kathodenseitig durch eine monoselektive Kationenaustauschermembran abgetrennt ist. Die Lösung, die in dem Anodenraum enthalten ist, wird in den Kathodenraum geleitet. Die Badlösung wird zunächst in den Kathodenraum eingeleitet. Hypophosphit- und Orthophosphitionen sollen in den mittleren Raum überführt werden. Dies erscheint jedoch unmöglich, da zwischen beiden Räumen eine Kationenaustauschermembran angeordnet ist. Aus diesem Grunde ist nicht erkennbar, wie das Verfahren realisiert werden kann.

Das Hauptproblem der bekannten Vorrichtungen und Verfahren besteht demnach darin, eine möglichst wirksame und vollständige Entfernung von störenden Ionen aus der Nickel/Phosphor-Abscheidelösung zu gewährleisten. Bei diesen Stoffen handelt es sich insbesondere um Natrium-, Orthophosphit- und Sulfationen. Außerdem soll das Verfahren während des Badbetriebes möglichst kontinuierlich durchführbar sein und lediglich eine Verfahrensstufe erfordern, um den Aufwand zu minimieren. Der vorliegenden Erfindung liegt von daher das Problem zugrunde, diese Nachteile zu vermeiden.

Gelöst wird das Problem durch das Verfahren nach Anspruch 1 und die Vorrichtung nach Anspruch 7. Bevorzugte Ausführungsformen der Erfindung sind in den Unteransprüchen angegeben.

Die Erfindung betrifft demnach ein Verfahren und eine Vorrichtung zum elektrodialytischen Regenerieren von stromlosen, Hypophosphitionen als Reduktionsmittel enthaltenden Metallabscheidebädern, insbesondere von Bädern zur Abscheidung von Nickel/Phosphorschichten, und geht davon aus, daß die Badflüssigkeit durch Diluaträume in einer Kathoden und Anoden aufweisenden ersten Elektrodialyseeinrichtung geleitet wird, die von Konzenträumen in der Elektrodialyseeinrichtung kathodenseitig durch monoselektive Kationenaustauschermembranen und anodenseitig durch Anionenaustauschermembranen getrennt sind. Die Badflüssigkeit wird gleichzeitig auch durch Diluaträume in einer zur ersten Einrichtung hydraulisch parallel geschalteten und Kathoden und Anoden aufweisenden zweiten Elektrodialyseeinrichtung geleitet, die von Konzenträumen in der zweiten Elektrodialyseeinrichtung kathodenseitig durch monoselektive Anionenaustauschermembranen und anodenseitig durch Anionenaustauschermembranen getrennt sind. In beiden Elektrodialyseeinrichtungen sind die Diluaträume und die Konzenträume jeweils abwechselnd zueinander angeordnet.

In der einfachsten Ausführungsform der Erfindung weist die Vorrichtung folgende Ausstattungsmerkmale auf:

a. eine erste Elektrodialyseeinrichtung, enthaltend zwei Konzenträume und einen dazwischen angeordneten Diluatraum als Elektrolyträume, wobei der Diluatraum kathodenseitig von dem einen Konzentraum durch eine monoselektive Kationenaustauschermembran und anodenseitig von dem anderen Konzentraum durch eine Anionenaustäuschermembran getrennt ist,

b. eine zweite Elektrodialyseeinrichtung, enthaltend zwei Diluaträume und einen dazwischen angeordneten Konzentraum als Elektrolyträume, wobei der Konzentraum kathodenseitig von dem einen Diluatraum durch eine Anionenaustauschermembran und anodenseitig von dem anderen Diluatraum durch eine monoselektive Anionenaustauschermembran getrennt ist, ferner

c. in jeder Elektrodialyseeinrichtung mindestens eine Kathode und mindestens eine Anode und

d. eine Stromversorgung für die Kathoden und die Anoden.

Die verbrauchte Badlösung, die neben den Wertstoffen des Bades, also Hypophosphit-, Carbonsäure- und Nickelionen, außerdem störende Begleitstoffe, nämlich beispielsweise Orthophosphit-, Sulfat- und Natriumionen, enthält, wird gleichzeitig in alle Diluaträume beider Elektrodialyseeinrichtungen geleitet. Durch Überführung werden in der ersten Elektrodialyseeinrichtung alle Anionen vom Diluatraum in die dazu anodenseitig angeordneten und die Natriumionen in die dazu kathodenseitig angeordneten Konzenträume überführt, während Nickelionen im Diluatraum verbleiben. In der zweiten Elektrodialyseeinrichtung werden lediglich die einwertigen Anionen, nämlich Hypophosphit- und Carbonsäureionen, von den Konzenträumen in die anodenseitigen Diluaträume überführt, während in diesem Falle die im Konzentraum enthaltenen Kationen sowie die zweiwertigen Anionen, nämlich Orthophosphit- und Sulfationen, in diesem Raum verbleiben.

Indem in der ersten Elektrodialyseeinrichtung im Diluatraum kathodenseitig eine monoselektive Kationenaustauschermembran eingesetzt wird, werden Natriumionen selektiv aus dem Diluatraum in den Konzentraum überführt. Nickelionen können durch die spezielle Anordnung der Membranen aus dem Diluatraum nicht austreten. Indem ferner in beiden Elektrodialyseeinrichtungen im Diluatraum anodenseitig eine Anionenaustauschermembran eingesetzt wird, wird zwar Hypophosphit, aber auch Orthophosphit und Sulfat aus dem Diluatraum in den Konzentraum überführt. Der Verlust an Hypophosphit- und Carbonsäureionen aus dem Diluatraum wird selektiv wieder kompensiert, indem in der zweiten Elektrodialyseeinrichtung im Konzentraum anodenseitig eine monoselektive Anionenaustauschermembran angeordnet ist, so daß diese Ionen aus dem Konzentraum in den Diluatraum selektiv überführt werden.

In der Bilanz werden also bei kontinuierlichem Durchlauf der Lösung durch beide Elektrodialyseeinrichtungen ausschließlich die Natrium-, Orthophosphit- und Sulfationen aus der verbrauchten Lösung entfernt, während die Wertstoffe in der Lösung erhalten bleiben. Mit dem erfindungsgemäßen Verfahren und der Vorrichtung wird folglich der optimale Wirkungsgrad der Abtrennung störender Badbestandteile und damit die Lösung des der Erfindung zugrunde liegenden Problems erreicht.

Indem beide Elektrodialyseeinrichtungen hydraulisch parallel betrieben werden und nicht in einem sequentiellen Verfahren, muß Elektroneutralität bezüglich der Ionehüberführung lediglich innerhalb der gesamten Anordnung gewährleistet sein. Das bedeutet, daß nur hinsichtlich der gesamten Anordnung die Menge von anionischen Stoffen, die in anodischer Richtung die Membranen passieren, gleich der Menge an kationischen Stoffen sein muß, die in kathodischer Richtung die Membranen passieren. Die Badlösung durchläuft kontinuierlich immer wieder beide Elektrodialyseeinrichtungen, so daß die zunächst nur teilweise abgetrennten Störstoffe nach und nach vollständig abgetrennt werden. Daher werden derartige nachteilige Effekte wie bei dem zweistufigen Verfahren aus EP 0 787 829 A1 nicht beobachtet.

Um insbesondere einen kontinuierlichen Betrieb des elektrodialytischen Verfahrens zu erreichen, wird durch die Konzenträume gleichzeitig eine Konzentratlösung geleitet. Diese Konzentratlösung enthält die im wesentlichen durch Anreicherung aus der verbrauchten Badlösung entfernten Störstoffe. Damit die Konzentration dieser Störstoffe nicht über einen kritischen Wert hinaus ansteigt, wird die Konzentratlösung fortwährend oder zumindest von Zeit zu Zeit (intermittierend) verdünnt. Außerdem kann dieser Lösung Natriumhydroxid zugefügt werden. Dieser Zusatz ermöglicht eine wirksame Trennung der Orthophosphitvon den Hypophosphitionen, indem ein optimaler pH-Wert der Konzentratlösung oberhalb von etwa 8,5 eingestellt wird (Bildung von $HPO_3^{2-}$ aus $H_2PO_3^-$).

Dadurch wird gewährleistet, daß die störenden Badbestandteile aus der verbrauchten Lösung fortwährend entfernt werden können. Andernfalls würden sich diese Stoffe in der Konzentratlösung über einen kritischen Wert hinaus anreichern und zu einer Verringerung der Trennwirkung führen, da die Störstoffe unter diesen Umständen nur noch ungenügend in die Konzentratlösung überführt werden könnten.

Um die Vorteile des elektrodialytischen Verfahrens ausnutzen zu können, werden in der ersten Elektrodialyseeinrichtung vorzugsweise jeweils mindestens zwei Diluaträume und mindestens drei Konzenträume und in der zweiten Elektrodialyseeinrichtung jeweils mindestens zwei Konzenträume und mindestens drei Diluaträume abwechselnd zueinander angeordnet. Dadurch wird bei vorgegebenen Abmessungen der Ionenaustauschermembranen eine ausreichend große Austauschfläche für die verbrauchte Badlösung in den Membranen zur Verfügung gestellt. Je größer diese Austauschfläche ist, desto schneller und wirksamer kann auch die Regenerierung des Bades fortschreiten. Daher wird in einer optimalen Konfiguration für die Regenerieranordnung eine Vielzahl von Diluat- und Konzenträumen in der ersten und eine Vielzahl von Diluatund Konzenträumen in der zweiten Elektrodialyseeinrichtung in jeweils alternierenden Abfolgen zueinander angeordnet. Es werden auf diese Weise zwei Stapel von Elektrolytzellen geschaffen, durch die die Diluatlösung durch die Diluaträume und die Konzentratlösung durch die Konzenträume hindurch geleitet werden. Grundsätzlich müssen die beiden Elektrodialysestapel nicht gleich viele Elektrolyträume aufweisen. Beispielsweise kann es vorteilhaft sein, eine größere Anzahl von Diluat- und Konzenträumen in der ersten Elektrodialyseeinrichtung vorzusehen als in der zweiten Elektrodialyseeinrichtung.

Durch die spezielle Anordnung der Ionenaustauschermembranen ergibt sich, daß die Konzenträume in der ersten Elektrodialyseeinrichtung kathodenseitig von Anionenaustauschermembranen und anodenseitig von monoselektiven Kationenaustauschermembranen begrenzt sind. An den Stirnseiten des Elektrodialysestapels sind die Anode und die Kathode angeordnet. Die mit der Kathode und der Anode in Kontakt stehenden Elektrolyträume werden, abweichend von der vorgegebenen Folge von Membranen, die die jeweiligen Räume voneinander abgrenzen, von den an diese angrenzenden Elektrolyträumen durch Kationenaustauschermembranen getrennt. In diesen äußeren Elektrolyträumen befindet sich eine im Kreislauf durch beide Räume geförderte elektrochemisch inerte Leitsalzlösung, beispielsweise eine Natriumsulfatlösung. Damit wird gewährleistet, daß keine unerwünschten Elektrodenreaktionen in diesen Räumen stattfinden, die zu einer Zerstörung der Elektroden oder zur Bildung weiterer unerwünschter Reaktionsprodukte an den Elektroden führen würden.

In gleicher Weise sind die Konzenträume in der zweiten Elektrodialyseeinrichtung kathodenseitig von Anionenaustauschermembranen und anodenseitig von monoselektiven Anionenaustauschermembranen begrenzt. Auch in diesem Falle sind an den Stirnseiten dieses zweiten Elektrodialysestapels eine Anode bzw. eine Kathode angeordnet. Die mit der Kathode und der Anode in Kontakt stehenden Elektrolyträume werden, abweichend von der vorgegebenen Folge von Membranen, die die Diluat- und Konzenträume voneinander abgrenzen, von den an sie angrenzenden Elektrolyträumen durch Kationenaustauschermembranen getrennt. Auch in diesem zweiten Falle befinden sich entsprechende inerte Lösungen im Kathoden- und im Anodenraum, so daß keine unerwünschten Elektrodenreaktionen stattfinden können.

Das Flächenverhältnis der normalen Anionenaustauschermembranen zu den monoselektiven Anionenaustauschermembranen in beiden Elektrodialysestapeln und der pH-Wert der durch die Konzenträume hindurch gelei-

teten Lösung (vorzugsweise mindestens 8,5) bestimmen den Grad des Verlustes an anionischen Wertstoffen, also von Hypophosphit- und Carbonsäureanionen.

In einer bevorzugten Ausführungsform sind die erste Elektrodialyseeinrichtung und die zweite Elektrodialyseeinrichtung in einem gemeinsamen Elektrodialysestapel zusammengefaßt und so angeordnet, daß lediglich an einer Stirnseite des gemeinsamen Elektrodialysestapels eine Kathode und an der anderen eine Anode angeordnet ist. Hierzu sind die jeweiligen Stapel elektrisch nicht gegeneinander isoliert. Vielmehr wird hierzu an den Grenzflächen zwischen den beiden Stapeln zur Abgrenzung des endständigen kathodenseitigen Konzentraraumes der ersten Elektrodialyseeinrichtung von dem endständigen anodenseitigen Diluatraum der zweiten Elektrodialyseeinrichtung eine Anionenaustauschermembran vorgesehen. In diesem Falle entfallen der an den endständigen Elektrolyträumen vorgesehene entsprechende Kathodenraum und der entsprechende Anodenraum sowie die zugehörigen Elektroden. Es sind in diesem Falle also lediglich ein Kathodenraum und ein Anodenraum an den Stirnseiten des Stapels sowie dort eine Kathode und eine Anode vorgesehen.

In einer weiteren bevorzugten alternativen Ausführungsform der Erfindung sind die erste Elektrodialyseeinrichtung und die zweite Elektrodialyseeinrichtung wiederum in einem gemeinsamen Elektrodialysestapel zusammengefaßt, wobei in diesem Falle jedoch die Abfolge der einzelnen Elektrolyträume so gewählt ist, daß die zur Kathode hin ausgerichteten Elektrolyträume der einen Elektrodialyseeinrichtung zum jeweils anderen Elektrodialysezellstapel hin ausgerichtet sind. Zwischen den beiden Elektrodialyseeinrichtungen ist eine gemeinsame Kathode und an den beiden Stirnseiten des gemeinsamen Elektrodialysestapels jeweils eine Anode angeordnet. Diese Zusammenfassung hat den Vorteil, daß nur ein Stapel hergestellt werden muß. In diesem Falle sind zwei Stromversorgungen vorgesehen, nämlich eine Stromversorgung für die Kathode und die eine Anode und eine weitere Stromversorgung für die Kathode und die andere Anode. Selbstverständlich können die Stromkreise beider Elektrodialyseeinrichtungen auch parallel geschaltet werden, so daß wiederum eine Stromversorgung ausreicht.

In einer dazu alternativen Ausführungsform wird die umgekehrte Reihenfolge der einzelnen Elektrolyträume gewählt. In diesem Fall sind die zur Anode hin ausgerichteten Elektrolyträume der einen Elektrodialyseeinrichtung zum jeweils anderen Elektrodialysezellstapel hin ausgerichtet. Zwischen den beiden Elektrodialyseeinrichtungen ist eine gemeinsame Anode und an den beiden Stirnseiten des gemeinsamen Elektrodialysestapels jeweils eine Kathode angeordnet.

In einer weiteren bevorzugten erfindungsgemäßen Ausführungsform wird die Badflüssigkeit des Abscheidebades in einem ersten Kreislauf über einen Diluatbehälter geleitet. Hierzu sind Flüssigkeitsführungsmittel (Rohrleitungen, Schläuche) zwischen dem Behälter, in dem sich das Abscheidebad befindet, und dem Diluatbehälter vorgesehen. Beispielsweise wird die Abscheidelösung durch geeignete Pumpen ständig vom Badbehälter in den Diluatbehälter und von dort wieder zurück in den Badbehälter im Kreislauf geführt. Die im Diluatbehälter enthaltene Flüssigkeit wird in einem zweiten Kreislauf durch die Diluaträume in der ersten und der zweiten Elektrodialyseeinrichtung und von dort wieder zurück geleitet. Die Flüssigkeit wird daher über den Diluatbehälter in die Diluaträume der Elektrodialyseeinrichtungen und nicht direkt vom Badbehälter in die Elektrodialyseeinrichtungen gefördert. Dadurch wird eine größere Flexibilität der Anlage erreicht, da der Volumenstrom (umlaufendes Flüssigkeitsvolumen pro Zeiteinheit) in den beiden Kreisläufen unabhängig voneinander eingestellt werden kann.

In einer besonders bevorzugten Ausführungsform wird der Volumenstrom im zweiten Kreislauf um mindestens eine Größenordnung größer eingestellt als der Volumenstrom im ersten Kreislauf. Vorzugsweise beträgt der Volumenstrom im ersten Kreislauf sogar höchstens 1 % des Volumenstroms im zweiten Kreislauf. Dadurch wird erreicht, daß nur ein geringer Volumenstrom der regelmäßig auf eine hohe Temperatur aufgeheizten Badlösung gekühlt, damit die hitzeempfindlichen Ionenaustauschermembranen und Anlagenteile in den Elektrodialyseeinrichtungen nicht zerstört werden, und anschließend wieder aufgeheizt werden muß. Dadurch werden geringe Wärmeverluste erreicht, so daß gegebenenfalls auf einen Wärmeübertrager verzichtet werden kann. Für eine kontinuierliche Entfernung von Störstoffen aus der Abscheidelösung wird fortwährend ein relativ großer Flüssigkeitsvolumenstrom durch die Diluaträume geleitet. Die Flüssigkeit wird beim Übergang in den Diluatbehälter abgekühlt. Spezielle Wärmeaustauscher sind hierzu nicht erforderlich. Da lediglich ein kleiner Volumenstrom in den Diluatbehälter gefördert wird, muß nur wenig Wärme aus der Badflüssigkeit abgeführt und bei der Rückführung wieder zugeführt werden. Daher ist der Wärmeverlust gering.

Der Diluatbehälter kann ferner zur Nachführung der bei der Metallabscheidung verbrauchten Badkomponenten, nämlich von Nickel- und Hypophosphitionen, eingesetzt werden. Durch Dosierung entsprechender Stoffe, beispielsweise von Nickelsulfat und Natriumhypophosphit, in den Diluatbehälter können diese Stoffe mit der hindurch strömenden Abscheidelösung vollständig vermischt werden, bevor die mit diesen Stoffen angereicherte Lösung wieder in den Badbehälter eintritt. Werden diese Stoffe direkt in den Badbehälter gegeben, besteht die Gefahr, daß sich Nickel an Behältereinbauten oder -wänden in metallischer Form abscheidet, da sich bei der Zugabe der Salze lokal erhöhte Konzentrationen dieser Stoffe ausbilden.

Zusätzlich kann ein Konzentratbehälter vorgesehen sein, von dem aus die Konzentratlösung in die Konzentraträume im Elektrodialysestapel und von dort wieder zurück zum Konzentratbehälter geleitet wird. Um eine geeignete Konzentration der Bestandteile der Konzentratlösung aufrechtzuerhalten, ist im Konzentratbehälter vorzugsweise ein Wasserzulauf angeordnet, mit dem eine Verdünnung der Lösung möglich ist. Durch Übertritt der Störstoffe aus dem Diluat in das Konzentrat reichern sich diese im Konzentrat kontinuierlich an, so daß eine Verdünnung erforderlich wird. Der Zulauf von Wasser wird beispielsweise über die elektrische Leitfähigkeit der Konzentratlösung gesteuert. In diesen Behälter wird ebenfalls die NaOH-Lösung dosiert.

Bei den hier erwähnten monoselektiven Ionenaustauschermembranen handelt es sich um solche Ionenaustauschermembranen, die lediglich Ionen mit einer einfachen Ladung passieren lassen, monoselektive Kationenaustauschermembranen also beispielsweise Natrium- und Hydronium-($H_3O^+$)-Ionen und monoselektive Anionenaustauschermembranen beispielsweise Hypophosphit-, Hydroxid- und Carbonsäureanionen, während diese Membranen für mehrfach geladene Ionen, also Nickel-, Sulfat- und Orthophosphitionen im wesentlichen undurchlässig sind. Falls lediglich auf Anionen- bzw. Kationenaustauschermembranen Bezug genommen wird, ohne auf monoselektive Eigenschaften hinzuweisen, handelt es sich um solche Ionenaustauschermembranen, die keine Selektivität hinsichtlich der Anzahl der Ladungen der passierenden Ionen aufweisen.

Nachfolgend wird die Erfindung an Hand von Figuren näher beschrieben. Es zeigen im einzelnen:

**Fig. 1:** eine schematische Darstellung der Teilprozesse in der ersten und der zweiten Elektrodialyseeinrichtung;
**Fig. 2:** eine schematische Darstellung einer ersten Ausführungsform der erfindungsgemäßen Vorrichtung;
**Fig. 3:** eine schematische Darstellung einer zweiten Ausführungsform der erfindungsgemäßen Vorrichtung.

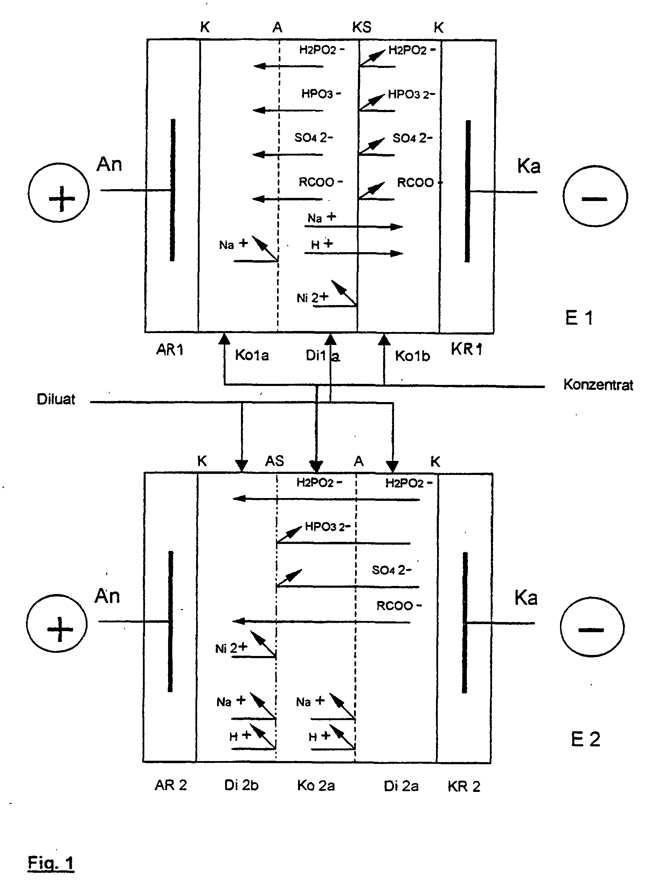

In **Fig. 1** ist der prinzipielle Aufbau der Elektrodialyseeinrichtungen in der einfachsten Ausführung schematisch dargestellt. In beiden Fällen sind Anoden **An** und Kathoden **Ka** in den entsprechenden Anodenräumen **AR1, AR2** bzw. den entsprechenden Kathodenräumen **KR1, KR2** enthalten. In diesen Räumen befindet sich austauschbare Elektrolytlösung, vorzugsweise eine Natriumsulfat-Lösung.

Die Anoden- bzw. Kathodenräume sind von den angrenzenden Elektrolyträumen durch Kationenaustauschermembranen **K** abgetrennt. Derartige Membranen, ebenso wie die übrigen verwendeten Ionenaustauschermembranen sind frei verfügbar und beispielsweise von Firma DuPont de Nemours, U.S.A. erhältlich.

Die Diluatlösung durchströmt alle Diluaträume **Di** und die Konzentratlösung alle Konzentraträume **Ko**. Dies ist durch die Pfeile schematisch angezeigt.

In der Elektrodialyseeinrichtung **E1**, die im oberen Teil von **Fig. 1** schematisch dargestellt ist, schließt sich an den Anodenraum **AR1** ein erster Konzentratraum **Ko1a** an. Die beiden Räume sind durch eine Kationenaustauschermembran **K** voneinander getrennt. Der Konzentratraum **Ko1a** wird von der Konzentratlösung durchströmt, vorzugsweise einer schwach alkalischen Lösung, die während des Betriebes die Stoffe enthält, die aus der Diluatlösung aufgenommen wurden (beispielsweise Orthophosphit-, Sulfat-, Natriumionen). Dieser erste Konzentratraum ist kathodenseitig von einer Anionenaustauschermembran **A** begrenzt. Zur Kathode hin schließt sich an den Konzentratraum **Ko1a** ein Diluatraum **Di1a** an, der von der Diluatlösung durchströmt wird. Kathodenseitig schließt sich an den Diluatraum wieder ein Konzentratraum **Ko1b** an, der von der Konzentratlösung durchströmt wird. Die Räume **Di1a** und **Ko1b** sind durch eine monoselektive Kationenaustauschermembran **KS** voneinander getrennt. Der Konzentratraum **Ko1b** ist von dem angrenzenden Kathodenraum **KR1** durch eine Kationenaustauschermembran **K** abgeteilt.

Im Konzentratraum **Ko1a** enthaltene Natriumionen werden nicht in den Diluatraum **Di1a** überführt. In der Diluatlösung befinden sich im Falle eines typischen Nickel/Phosphor-Abscheidebades Nickel-, Natrium-, Hypophosphit- ($H_2PO_2^-$), Orthophosphit- ($HPO_3^{2-}$), Sulfat- und Carbonsäureionen ($RCOO^-$). Von den sich im Diluatraum **Di1a** befindenden Ionensorten werden alle Anionen, also Hypophosphit-, Orthophosphit-, Sulfat- und Carbonsäureanionen, durch die Anionenaustauschermembran **A** in den Konzentratraum **Ko1a** und von den Kationen die einfach geladenen Natrium- und Hydroniumionen durch die monoselektive Kationenaustauschermembran **KS** in den Konzentratraum **Ko1b** überführt. Dagegen werden die zweifach geladenen Nickelionen nicht in den Konzentratraum **Ko1b** überführt, sondern verbleiben im Diluatraum. Im Konzentratraum **Ko1b** gegebenenfalls in geringer Konzentration enthaltene Hydroxidionen können nicht in den Diluatraum übertreten. Dasselbe gilt auch für die Hypophosphit-, Orthophosphit-, Sulfat- und Carbonsäureionen.

In der Gesamtbilanz der Elektrodialyseeinrichtung **E1** werden daher alle Anionen in den Konzentratraum überführt, während von den Kationen lediglich die Natriumionen und die Hydroniumionen in den Konzentratraum übertreten, nicht jedoch die Nickelionen.

In der Elektrodialyseeinrichtung **E2**, die im unteren Teil von **Fig. 1** schematisch dargestellt ist, schließt sich an den Anodenraum **AR2** ein erster Diluatraum **Di2b** an. Der Anodenraum ist kathodenseitig von einer Kationenaustauschermembran **K** begrenzt. Dieser Diluatraum wird von der Diluatlösung durchströmt. Der Diluatraum ist kathodenseitig von einer monoselektiven Anionenaustauschermembran **AS** begrenzt. Kathodenseitig schließt sich ein Konzentratraum **Ko2a** an, durch den die Konzentratlösung strömt. Dieser wird von einem benachbarten zweiten Diluatraum **Di2a**, durch den die Diluatlösung fließt, durch eine Anionenaustauschermembran **A** abgeteilt. Dieser zweite Diluatraum **Di2a** ist kathodenseitig gegen den sich anschließenden Kathodenraum **KR2** mittels einer Kationenaustauschermembran **K** abgeteilt.

Aus dem ersten Diluatraum **Di2b** können Kationen nicht in den angrenzenden Konzentratraum **Ko2a** übertreten, da beide Räume durch eine monoselektive Anionenaustauschermembran **AS** voneinander getrennt sind. Gleichfalls können im Konzentratraum enthaltene Natriumionen nicht in den zweiten Diluatraum **Di2a** übertreten, da der Überführung der Natriumionen in diesem Fall eine Anionenaustauschermembran entgegensteht. Im zweiten Diluatraum **Di2a** enthaltene Anionen, nämlich Hypophosphit-, Orthophosphit-, Sulfat-, Carbonsäureund Hydroxidionen, werden in den mittleren Konzentratraum **Ko2a** überführt. Von den in den Konzentratraum gelangten Anionen können lediglich die einfach geladenen Anionen durch die monoselektive Anionenaustauschermembran **AS** in den Diluatraum **Di2b** übertreten, nämlich Hypophosphit-, Carbonsäure- und Hydroxidionen.

In der Gesamtbilanz der in dieser Elektrodialyseeinrichtung ablaufenden Teilprozesse werden damit die störenden Badbestandteile selektiv in den Konzentratraum überführt, während die Wertstoffe nach dem Passieren des Konzentratraumes wieder in die Diluatlösung zurückgeführt werden.

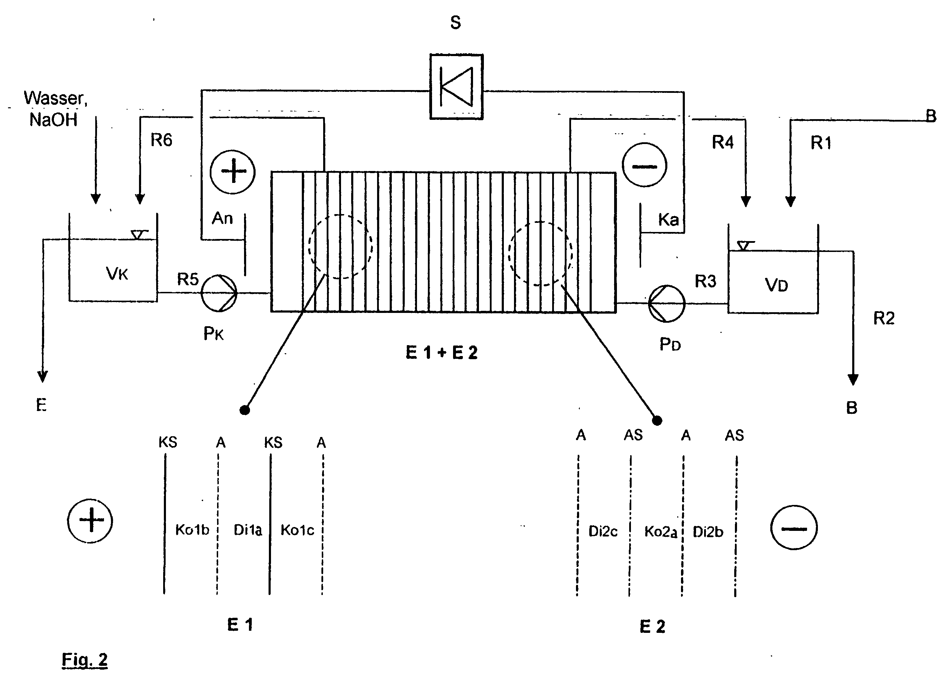

Die erfindungsgemäße Elektrodialyseeinrichtung besteht aus beiden Elektrodialysestapeln **E1** und **E2**, wie in **Fig. 2** gezeigt ist. Diese sind im unteren Teil von **Fig. 2** im Ausschnitt separat vergrößert als Grundeinheit dargestellt. Beide Stapel sind zu einem gemeinsamen Stapel zusammengefaßt. An den Stirnseiten des gemeinsamen Stapels sind die Elektroden angebracht, in **Fig. 2** links eine Anode **An** und rechts die Kathode **Ka**. Als Anode wird beispielsweise ein Blech aus Edelstahl oder mit Edelmetallmischoxiden beschichtetes oder platiniertes Titan eingesetzt. Für die Kathode kann ein Blech aus demselben Material verwendet werden. Die einzelnen Elektrodialysezellen innerhalb des Stapels bestehen jeweils aus speziell geformten Rahmen, die die Diluaträume **Di** bzw. Konzentraträume **Ko** freilassen und Strömungskanäle aufweisen, um eine geführte Durchströmung der einzelnen Räume mit der Diluatlösung einerseits und der Konzentratlösung andererseits zu gestatten. Die Strömungskanäle sind dabei so geformt, daß die vom Diluatbehälter **V_D** kommende Flüssigkeit gleichzeitig in alle Diluaträume **Di** und die vom Konzentratbehälter **V_K** kommende Flüssigkeit gleichzeitig in alle Konzenträume **Ko** eintreten können.

Außerdem sind im Stapel Dichtungen enthalten, um ein Austreten der Flüssigkeit aus dem Stapel oder ein Übertreten von Flüssigkeit von einem Raum in einen benachbarten zu vermeiden. An den Endflächen sind kraftaufnehmende Platten, beispielsweise aus Stahl, vorgesehen. Der gesamte Stapel wird mit Bolzen, die sich durch den gesamten Stapel hindurch erstrecken, verschraubt oder hydraulisch verspannt.

Der gesamte Stapel weist ferner die zur Separation der Ionensorten erforderlichen Ionenaustauschermembranen auf, die die einzelnen Räume voneinander abtrennen. Die Elektrodialyseeinrichtung **E1** besteht aus alternierend zueinander angeordneten Diluaträumen **Di1a, Di1b, Di1c,..., Di1x** und Konzenträumen **Ko1a, Ko1b, Ko1c,..., Ko1x**. Zur Kathodenseite hin sind die Diluaträume von den Konzenträumen durch monoselektive Kationenaustauschermembranen **KS** getrennt und zur Anodenseite hin durch Anionenaustauschermembranen **A**. Die Anode **An** steht mit dem äußeren anodenseitigen Raum der Elektrodialyseeinrichtung **E1** in direktem Kontakt. Es handelt sich hierbei um den Anodenraum. Der Anodenraum ist von dem benachbarten Konzentratraum **Ko1a** durch eine Kationenaustauschermembran **K** getrennt.

Am äußeren kathodenseitigen Konzentratraum **Ko1x** ist die Elektrodialyseeinrichtung **E1** mit der Elektrodialyseeinrichtung **E2** verbunden. Die Verbindungsstelle wird durch eine Anionenaustauschermembran **A** vermittelt. Kathodenseitig befindet sich angrenzend an dieser Anionenaustauschermembran ein Diluatraum **Di2x** der Einrichtung **E2**. In dieser Elektrodialyseeinrichtung **E2** wechseln die Diluaträume **Di2x,..., Di2c, Di2b, Di2a** und die Konzenträume **Ko2x, ..., Ko2c, Ko2b, Ko2a** miteinander ab. Beispielsweise können zwei Diluaträume **Di1** und drei Konzenträume **Ko1** in der Elektrodialyseeinrichtung **E1** und drei Diluaträume **Di2** und zwei Konzenträume **Ko2** in der Elektrodialyseeinrichtung **E2** zusammengefaßt sein.

Jeder Diluatraum **Di2** ist zur Anodenseite hin durch eine Anionenaustauschermembran **A** und zur Kathodenseite hin durch eine monoselektive Anionenaustauschermembran **AS** von den benachbarten Konzenträumen **Ko2** getrennt.

Die Kathode **Ka** steht mit dem äußeren kathodenseitigen Raum der Elektrodialyseeinrichtung **E2** in direktem Kontakt. Es handelt sich hierbei um den Kathodenraum. Der Kathodenraum ist von dem benachbarten Diluatraum **Di2a** durch eine Kationenaustauschermembran getrennt.

Die Anode **An** und die Kathode **Ka** sind mit einer Gleichrichter-Stromversorgung **S** verbunden.

Die Badlösung wird vom Badbehälter **B** kommend über eine Rohrleitung **R_1** in den Diluatbehälter **V_D** gepumpt, beispielsweise mit einem Volumenstrom von 20 l/h. Die Lösung im Behälter **V_D** wird über eine weitere Rohrleitung **R_2** wieder in den Behälter **B** zurückgeleitet. Im Diluatbehälter **V_D** kühlt sich die beispielsweise mit einer Temperatur von 90°C eintretende Nickel/Phosphor-Abscheidelösung auf eine Temperatur von beispielsweise 40°C ab.

Vom Diluatbehälter wird die Abscheidelösung mit einer Pumpe **P_D** über eine Rohrleitung **R_3** in alle Diluaträume **Di1** und **Di2** der Elektrodialyseeinrichtungen **E1** und **E2** gefördert. Der Volumenstrom beträgt beispielsweise 7 m³/h. Nach Durchtritt der Lösung durch die Diluaträume gelangt diese über die Rohrleitung **R_4** zurück in den Diluatbehälter.

Die Konzenträume **Ko1** und **Ko2** beider Elektrodialyseeinrichtungen werden von einer Konzentratlösung durchströmt. Die Konzentratlösung befindet sich in dem Konzentratbehälter **V_K**. Die Lösung wird mit einer Pumpe **P_K** über die Rohrleitung **R_5** gleichzeitig in alle Konzenträume gefördert. Nach Durchtritt der Lösung durch diese Räume gelangt die Lösung über die Rohrleitung **R$_6$** wieder in den Konzentratbehälter. Da sich fortwährend die in der Abscheidelösung befindenden Störstoffe, wie Orthophosphit-, Sulfat- und Natriumionen, in der Konzentratlösung anreichern, muß diese kontinuierlich verdünnt werden, um eine Hemmung der Überführung dieser Ionensorten durch die Ionenaustauschermembranen zu vermeiden. Hierzu wird fortwährend oder intermittierend Wasser zum Konzentratbehälter zugegeben.

Um ferner einen optimalen pH-Wert für die selektive Überführung von Orthophosphitionen in der Konzentratlösung einzustellen, wird der pH-Wert der Konzentratlösung durch Zugabe von Natriumhydroxid zur Lösung auf Werte oberhalb von 8,5 eingestellt. Auch dieses muß fortwährend nachdosiert werden, da Hydroxidionen durch Umwandlung von $HPO_3^{2-}$ in $H_2PO_3^-$ verbraucht werden und damit aus der Konzentratlösung verloren gehen.

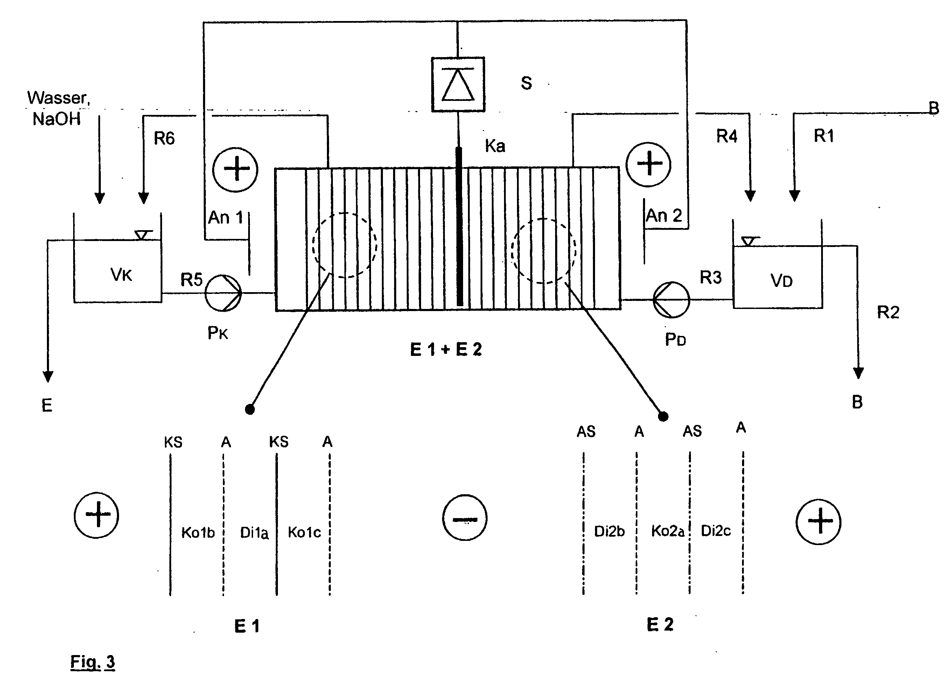

In einer weiteren Ausführungsform (**Fig. 3**) werden die gemäß **Fig. 2** gezeigten Elektrodialyseeinrichtungen **E1** und **E2** eingesetzt. Die beiden Einrichtungen werden ebenfalls in einem gemeinsamen Stapel zusammengefaßt, jedoch in der Weise, daß die Kathodenseiten beider Einrichtungen aneinandergrenzen und zwischen beiden Einzelstapeln eine Kathode **Ka** angeordnet ist. In diesem Fall kehrt sich daher die Reihenfolge der Austauschermembranen in der Einrichtung **E2** um.

Auch in diesem Fall sind Kationenaustauschermembranen zwischen den Kathodenräumen und den angrenzenden Elektrolyträumen einerseits und zwischen den Anodenräumen und den angrenzenden Elektrolyträumen andererseits vorgesehen.

Zur Stromversorgung wird hier wiederum ein Gleichrichter verwendet, der beide Elektrodialysestapel gleichzeitig versorgt, indem die beiden Stapel elektrisch zueinander parallel geschaltet sind. Der Stromkreis durch die Kathode **Ka** und die Anode **An$_1$** ist mit dem Stromkreis durch die Kathode **Ka** und die Anode **An$_2$** parallel geschaltet.

Die übrigen Elemente der Vorrichtung sind mit denen der ersten Ausführungsform identisch.

Nachfolgend wird ein Beispiel zur weiteren Erläuterung der Erfindung angegeben:

Nickel/Phosphor-Legierungsschichten wurden aus einem geeigneten Bad auf Stahlblechen abgeschieden. Das Nickel/Phosphorbad hatte anfänglich folgende Zusammensetzung:

| | |
|---|---|
| $Na^+$ (aus $NaH_2PO_2$) | 6,5 g/l |
| $Ni^{2+}$ (aus $NiSO_4$) | 7,0 g/l |
| $HPO_3^{2-}$ (durch Oxidation von Hypophosphit gebildet) | 0 g/l |
| $H_2PO_2^-$ (aus $NaH_2PO_2$) | 18 g/l |
| $SO_4^{2-}$ (aus $NiSO_4$) | 12 g/l |
| Milchsäure | 30 g/l |
| Propionsäure | 5 g/l |
| $Pb^{2+}$ aus $Pb(NO_3)_2$ | 2 mg/l |

mit folgenden Eigenschaften:

| | |
|---|---|
| pH-Wert | 4,6 |
| Temperatur | 85°C |
| Abscheidegeschwindigkeit | 12 bis 14 µm/h |

Nach einer Alterung des Bades auf 5,6 MTO war das Bad erschöpft und wies folgende Konzentrationen bzw. Parameter auf:

| | |
|---|---|
| $Na^+$ | 46 g/l |
| $Ni^{2+}$ | 6 g/l |
| $HPO_3^{2-}$ | 134 g/l |
| $H_2PO_2^-$ | 18 g/l |
| $SO_4^{2-}$ | 66 g/l |
| pH-Wert | 5,0 |
| Temperatur | 90°C |
| Abscheidegeschwindigkeit | 5 µm/h |

Nach der Alterung des Bades war die Qualität der Nickel/Phosphor-Überzüge auf einen nicht mehr akzeptablen Grenzwert gesunken. Daher mußte das Bad verworfen werden.

In einem zweiten Versuch wurde ein Bad mit der oben angegebenen anfänglichen Ursprungszusammensetzung betrieben und unter Verwendung der in **Fig. 2** dargestellten Vorrichtung kontinuierlich regeneriert. Die Bedingungen sind nachfolgend angegeben:

| | |
|---|---|
| Badbehältervolumen | $1 \ m^3$ |
| Badbelastung (zu beschichtende Metalloberfläche pro Badvolumen) | $10 \ m^2/m^3$ |
| Volumenstrom vom Bad zum Diluatbehälter | 30 l/h |
| Volumenstrom vom Diluatbehälter zur Elektrodialyseeinrichtung | 6000 l/h |
| Wärmeverluste | 0,8 kW |
| Elektrische Leistungsaufnahme | 4,2 kW |

Durch den vergleichsweise geringen Volumenstrom vom Bad zum Diluatbehälter wurde ein aufwendiger und verlustreicher Wärmeaustausch zur Abkühlung des Bades und spätere Wieder-Aufheizung der zurückgeführten Lösung vermieden. Es war lediglich erforderlich, die zur Elektrodialyse aufgewendete elektrische Leistung abzuführen, um die maximal zulässige Temperatur im Elektrodialysestapel nicht zu überschreiten. Für diese Kühlung wurde zweckmäßigerweise Spülwasser einer Warmspüle verwendet, die bei der Behandlung von Metalloberflächen zur Vernickelung benötigt und ohnehin aufgeheizt werden mußte.

Die Konzentrationen der einzelnen Badbestandteile und die Badparameter konnten hierbei auf folgenden Werten konstant gehalten werden:

| | |
|---|---|
| $Na^+$ | 24 g/l |
| $Ni^{2+}$ | 7,0 g/l |
| $HPO_3^{2-}$ | 60 g/l |
| $H_2PO_2^-$ | 18 g/l |
| $SO_4^{2-}$ | 36 g/l |
| pH-Wert | 4,7 |
| Temperatur | 88°C |
| Abscheidegeschwindigkeit | 12 µm/h. |

Die Zusammensetzung des erhaltenen Bades entsprach, ausgehend von dem neu angesetzten Bad, einem Abscheidebad mit einem Alter von etwa 2 bis 3 MTO.

**Patentansprüche**

1. Verfahren zum elektrodialytischen Regenerieren eines stromlosen, Hypophosphitionen als Reduktionsmittel enthaltenden Metallabscheidebades, bei dem die Flüssigkeit des Bades durch Diluaträume (**Di1a,Di1b,...,Di1x**) in einer Kathoden (**Ka**) und Anoden (**An**) aufweisenden ersten Elektrodialyseeinrichtung (**E1**) geleitet wird, die von Konzenträumen (**Ko1a,Ko1b,...,Ko1x**) in der Elektrodialyseeinrichtung (**E1**) kathodenseitig durch monoselektive Kationenaustauschermembranen (**KS**) und anodenseitig durch Anionenaustauschermembranen (**A**) getrennt sind, wobei die Diluaträume (**Di1a,Di1b,...,Di1x**) und die Konzenträume (**Ko1a,Ko1b,...,Ko1x**) abwechselnd zueinander angeordnet sind,
   **dadurch gekennzeichnet, daß** die Badflüssigkeit gleichzeitig durch Diluaträume (**Di2a,Di2b,...,Di2x**) in einer Kathoden (**Ka**) und Anoden (**An,An₂**) aufweisenden zweiten Elektrodialyseeinrichtung (**E2**) geleitet wird, die von Konzenträumen (**Ko2a,Ko2b,...,Ko2x**) in der zweiten Elektrodialyseeinrichtung (**E2**) kathodenseitig durch monoselektive Anionenaustauschermembranen (**AS**) und anodenseitig durch Anionenaustauschermembranen (**A**) getrennt sind, wobei die Diluaträume (**Di2a,Di2b,..., Di2x**) und die Konzenträume (**Ko2a,Ko2b,..., Ko2x**) in der zweiten Elektrodialyseeinrichtung (**E2**) abwechselnd zueinander angeordnet sind.

2. Verfahren nach Anspruch 1, **dadurch gekennzeichnet, daß** durch die Konzenträume (**Ko2a,Ko2b,...,Ko2x**) gleichzeitig eine Konzentratlösung geleitet wird.

3. Verfahren nach einem der vorstehenden Ansprüche, **dadurch gekennzeichnet, daß** die erste Elektrodialyseeinrichtung (**E1**) und die zweite Elektrodialyseeinrichtung (**E2**) in einem gemeinsamen Elektrodialysestapel zusammengefaßt und so angeordnet werden, daß lediglich an einer Stirnseite des gemeinsamen Elektrodialysestapels eine Kathode (**Ka**) und an der anderen eine Anode (**An**) angeordnet ist.

**4.** Verfahren nach einem der Ansprüche 1 und 2, **dadurch gekennzeichnet, daß** die erste Elektrodialyseeinrichtung (**E1**) und die zweite Elektrodialyseeinrichtung (**E2**) in einem gemeinsamen Elektrodialysestapel zusammengefaßt und so angeordnet werden,

a. daß zwischen den beiden Elektrodialyseeinrichtungen (**E1,E2**) eine gemeinsame Kathode (**Ka**) und an den beiden Stirnseiten des gemeinsamen Elektrodialysestapels (**E1,E2**) jeweils eine Anode (**An$_1$,An$_2$**) angeordnet ist oder
b. daß zwischen den beiden Elektrodialyseeinrichtungen (**E1,E2**) eine gemeinsame Anode (**An**) und an den beiden Stirnseiten des gemeinsamen Elektrodialysestapels (**E1,E2**) jeweils eine Kathode (**Ka**) angeordnet ist.

**5.** Verfahren nach einem der vorstehenden Ansprüche, **dadurch gekennzeichnet, daß** die Badflüssigkeit des Abscheidebades in einem ersten Kreislauf über einen Diluatbehälter (**V$_D$**) und die im Diluatbehälter (**V$_D$**) enthaltene Flüssigkeit in einem zweiten Kreislauf durch die Diluaträume (**Di1a,Di1b,...,Di1x,Di2a,Di2b, ...,Di2x**) in der ersten und der zweiten Elektrodialyseeinrichtung (**E1,E2**) geleitet wird, wobei der Volumenstrom im zweiten Kreislauf um mindestens eine Größenordnung, vorzugsweise um mindestens zwei Größenordnungen, größer ist als der Volumenstrom im ersten Kreislauf.

**6.** Verfahren zum elektrodialytischen Regenerieren eines stromlosen, Hypophosphitionen als Reduktionsmittel enthaltenden Nickelabscheidebades nach einem der vorstehenden Ansprüche.

**7.** Vorrichtung zum elektrodialytischen Regenerieren eines stromlosen, Hypophosphitionen als Reduktionsmittel enthaltenden Metallabscheidebades, enthaltend

a. eine erste Elektrodialyseeinrichtung (**E1**), enthaltend zwei Konzenträume (**Ko1a,Ko1b**) und einen dazwischen angeordneten Diluatraum (**Di1a**) als Elektrolyträume, wobei der Diluatraum (**Di1a**) kathodenseitig von dem einen Konzentraum (**Ko1b**) durch eine monoselektive Kationenaustauschermembran (**KS**) und anodenseitig von dem anderen Konzentraum (**Ko1a**) durch eine Anionenaustauschermembran (**A**) getrennt ist,
b. in der ersten Elektrodialyseeinrichtung (**E1**) mindestens eine Kathode (**Ka**) und mindestens eine Anode (**An**) und
c. eine Stromversorgung (**S**) für die Kathoden (**Ka**) und die Anoden (**An,An$_1$**),
**gekennzeichnet durch**
d. eine zweite Elektrodialyseeinrichtung (**E2**), enthaltend zwei Diluaträume (**Di2a,Di2b**) und einen dazwischen angeordneten Konzentraum (**Ko2a**) als Elektrolyträume, wobei der Konzentraum (**Ko2a**) kathodenseitig von dem einen Diluatraum (**Di2a**) **durch** eine Anionenaustauschermembran (**A**) und anodenseitig von dem anderen Diluatraum (**Di2b**) **durch** eine monoselektive Anionenaustauschermembran (**AS**) getrennt ist sowie mindestens eine Kathode (**Ka**) und mindestens eine Anode (**An,An$_2$**) und eine Stromversorgung (**S**) für die Kathoden und die Anoden.

**8.** Vorrichtung nach Anspruch 7, **dadurch gekennzeichnet, daß** in der ersten Elektrodialyseeinrichtung (**E1**) jeweils mindestens zwei Diluaträume (**Di1a,Di1b**) und mindestens drei Konzenträume (**Ko1a,Ko1b,Ko1c**) abwechselnd zueinander angeordnet sind und in der zweiten Elektrodialyseeinrichtung (**E2**) jeweils mindestens zwei Konzenträume (**Ko2a,Ko2b**) und mindestens drei Diluaträume (**Di2a,Di2b,Di2c**) abwechselnd zueinander angeordnet sind.

**9.** Vorrichtung nach einem der Ansprüche 7 und 8, **dadurch gekennzeichnet, daß** die Konzenträume (**Ko1a, Ko1b,...,Ko1x**) in der ersten Elektrodialyseeinrichtung (**E1**) kathodenseitig von Anionenaustauschermembranen (**A**) und anodenseitig von monoselektiven Kationenaustauschermembranen (**KS**) begrenzt sind, mit der Maßgabe, daß die mit den Kathoden (**Ka**) oder den Anoden (**An,An$_1$**) in Kontakt stehenden Elektrolyträume (**KR1,AR1**) von den an diese angrenzenden Elektrolyträumen durch Kationenaustauschermembranen (**K**) getrennt sind.

**10.** Vorrichtung nach einem der Ansprüche 7 bis 9, **dadurch gekennzeichnet, daß** die Konzenträume (**Ko2a, Ko2b,...,Ko2x**) in der zweiten Elektrodialyseeinrichtung (**E2**) kathodenseitig von Anionenaustauschermembranen (**A**) und anodenseitig von monoselektiven Anionenaustauschermembranen (**AS**) begrenzt sind, mit der Maßgabe, daß die mit den Kathoden (**Ka**) oder den Anoden (**An,An$_2$**) in Kontakt stehenden Elektrolyträume (**KR2,AR2**) von den an diese angrenzenden Elektrolyträumen durch Kationenaustauschermembranen (**K**) getrennt sind.

**11.** Vorrichtung nach einem der Ansprüche 7 bis 10, **dadurch gekennzeichnet, daß** erste Flüssigkeitsführungsmittel

($R_1$,$R_2$) vorgesehen sind, mit denen die Flüssigkeit des Bades in einem ersten Kreislauf durch einen Diluatbehälter ($V_D$) führbar ist, und ferner zweite Flüssigkeitsführungsmittel ($R_3$,$R_4$), mit denen die Flüssigkeit im Diluatbehälter ($V_D$) in einem zweiten Kreislauf vom Diluatbehälter ($V_D$) durch die Diluaträume (**Di1,Di2**) in der ersten (**E1**) und der zweiten (**E2**) Elektrodialyseeinrichtung und von dort wieder zurückführbar ist.

12. Vorrichtung nach einem der Ansprüche 7 bis 11, **dadurch gekennzeichnet, daß** die erste Elektrodialyseeinrichtung (**E1**) und die zweite Elektrodialyseeinrichtung (**E2**) in einem gemeinsamen Elektrodialysestapel zusammengefaßt und so angeordnet sind, daß lediglich an einer Stirnseite des gemeinsamen Elektrodialysestapels eine Kathode (**Ka**) und an der anderen eine Anode (**An**) angeordnet ist.

13. Vorrichtung nach einem der Ansprüche 7 bis 11, **dadurch gekennzeichnet, daß** die erste Elektrodialyseeinrichtung (**E1**) und die zweite Elektrodialyseeinrichtung (**E2**) in einem gemeinsamen Elektrodialysestapel zusammengefaßt und so angeordnet sind,

   a.' daß zwischen den beiden Elektrodialyseeinrichtungen eine gemeinsame Kathode (**Ka**) und an den beiden Stirnseiten des gemeinsamen Elektrodialysestapels jeweils eine Anode (**An$_1$,An$_2$**) angeordnet ist oder
   b. daß zwischen den beiden Elektrodialyseeinrichtungen eine gemeinsame Anode (**An**) und an den beiden Stirnseiten des gemeinsamen Elektrodialysestapels jeweils eine Kathode (**Ka**) angeordnet ist.

**Claims**

1. Method of electrodialytically regenerating a currentless metal deposition bath, which contains hypophosphite ions as the reducing agent, wherein the liquid of the bath is conducted through diluate chambers (**Di1a,Di1b,...,Di1x**) in a first electrodialysis arrangement (**E1**), which has cathodes (**Ka**) and anodes (**An**), said chambers being separated from concentrate chambers (**Ko1a,Ko1b,...,Ko1x**) in the electrodialysis arrangement (**E1**) on the cathode side by monoselective cation exchanger diaphragms (**KS**) and on the anode side by anion exchanger diaphragms (A), the diluate chambers (**Di1a,Di1b,...,Di1x**) and the concentrate chambers (**Ko1a,Ko1b,...,Ko1x**) being disposed so as to alternate with one another, **characterised in that** the bath liquid is simultaneously conducted through diluate chambers (**Di2a,Di2b,...,Di2x**) in a second electrodialysis arrangement (**E2**), which has cathodes (**Ka**) and anodes (**An,An$_2$**), said chambers being separated from concentrate chambers (**Ko2a,Ko2b,...,Ko2x**) in the second electrodialysis arrangement (**E2**) on the cathode side by monoselective anion exchanger diaphragms (**AS**) and on the anode side by anion exchanger diaphragms (**A**), the diluate chambers (**Di2a,Di2b,...,Di2x**) and the concentrate chambers (**Ko2a,Ko2b,...,Ko2x**) in the second electrodialysis arrangement (**E2**) being disposed so as to alternate with one another.

2. Method according to claim 1, **characterised in that** a concentrate solution is simultaneously conducted through the concentrate chambers (**Ko2a,Ko2b,...,Ko2x**)**.**

3. Method according to one of the preceding claims, **characterised in that** the first electrodialysis arrangement (**E1**) and the second electrodialysis arrangement (**E2**) are combined in a common electrodialysis stack and are so disposed that only one cathode (**Ka**) is disposed at one end face of the common electrodialysis stack, and only one anode (**An**) is disposed at the other end face of said stack.

4. Method according to one of claims 1 and 2, **characterised in that** the first electrodialysis arrangement (**E1**) and the second electrodialysis arrangement (**E2**) are combined in a common electrodialysis stack and are so disposed

   a. that a common cathode (**Ka**) is disposed between the two electrodialysis arrangements (**E1,E2**), and a respective anode (**An$_1$, An$_2$**) is disposed at each of the two end faces of the common electrodialysis stack (**E1,E2**), or
   b. that a common anode (**An**) is disposed between the two electrodialysis arrangements (**E1,E2**), and a respective cathode (**Ka**) is disposed at each of the two end faces of the common electrodialysis stack (**E1,E2**).

5. Method according to one of the preceding claims, **characterised in that** the bath liquid of the separating bath is conducted through the diluate chambers (**Di1a,Di1b,...,Di1x,Di2a,Di2b,...,Di2x**) in the first and second electrodialysis arrangements (**E1,E2**) in a first circuit via a diluate container ($v_D$), and the liquid contained in the diluate container ($V_D$) is conducted therethrough in a second circuit, the volumetric flow in the second circuit being greater than the volumetric flow in the first circuit by at least one order of magnitude, preferably by at least two orders of magnitude.

6. Method of electrodialytically regenerating a currentless nickel separating bath, which contains hypophosphite ions as the reducing agent, according to one of the preceding claims.

7. Apparatus for electrodialytically regenerating a currentless metal separating bath, which contains hypophosphite ions as the reducing agent, said apparatus including

   a. a first electrodialysis arrangement (**E1**), containing two concentrate chambers (**Ko1a,Ko1b**) and one diluate chamber (**Di1a**), which is disposed therebetween, as the electrolyte chambers, the diluate chamber (**Di1a**) being separated from one concentrate chamber (**Ko1b**) on the cathode side by a monoselective cation exchanger diaphragm (**KS**) and from the other concentrate chamber (**Kola**) on the anode side by an anion exchanger diaphragm (**A**),
   b. at least one cathode (**Ka**) and at least one anode (**An**) in the first electrodialysis arrangement (**E1**), and
   c. a power supply (**S**) for the cathodes (**Ka**) and the anodes (**An,An$_1$**),
   **characterised by**
   d. a second electrodialysis arrangement (**E2**), containing two diluate chambers (**Di2a,Di2b**) and one concentrate chamber (**Ko2a**), which is disposed therebetween, as the electrolyte chambers, the concentrate chamber (**Ko2a**) being separated from one diluate chamber (**Di2a**) on the cathode side by an anion exchanger diaphragm (**A**) and from the other diluate chamber (**Di2b**) on the anode side by a monoselective anion exchanger diaphragm (**AS**), as well as containing at least one cathode (**Ka**) and at least one anode (**An,An$_2$**) and one power supply (**S**) for the cathodes and the anodes.

8. Apparatus according to claim 7, **characterised in that** at least two diluate chambers (**Di1a,Di1b**) and at least three concentrate chambers (**Ko1a,Ko1b,Ko1c**) are respectively disposed in the first electrodialysis arrangement (**E1**) so as to alternate with one another, and at least two concentrate chambers (**Ko2a,Ko2b**) and at least three diluate chambers (**Di2a,Di2b,Di2c**) are respectively disposed in the second electrodialysis arrangement (**E2**) so as to alternate with one another.

9. Apparatus according to one of claims 7 and 8, **characterised in that** the concentrate chambers (**Ko1a,Ko1b,..., Ko1x**) in the first electrodialysis arrangement (**E1**) are defined on the cathode side by anion exchanger diaphragms (**A**) and on the anode side by monoselective cation exchanger diaphragms (**KS**), with the proviso that the electrolyte chambers (**KR1,AR1**), which are in contact with the cathodes (**Ka**) or the anodes (**An,An$_1$**), are separated from the electrolyte chambers, which abut against said electrolyte chambers (**KR1,AR1**), by cation exchanger diaphragms (**K**).

10. Apparatus according to one of claims 7 to 9, **characterised in that** the concentrate chambers (**Ko2a,Ko2b,..., Ko2x**) in the second electrodialysis arrangement (**E2**) are defined on the cathode side by anion exchanger diaphragms (**A**) and on the anode side by monoselective anion exchanger diaphragms (**AS**), with the proviso that the electrolyte chambers (**KR2,AR2**), which are in contact with the cathodes (**Ka**) or the anodes (**An,An$_2$**), are separated from the electrolyte chambers, which abut against said electrolyte chambers (**KR2,AR2**), by cation exchanger diaphragms (**K**).

11. Apparatus according to one of claims 7 to 10, **characterised in that** first liquid guiding means (**R$_1$,R$_2$**) are provided, by means of which the liquid of the bath is guidable through a diluate container (**V$_D$**) in a first circuit, and second liquid guiding means (**R$_3$,R$_4$**) are also provided, by means of which the liquid in the diluate container (**V$_D$**) is returnable in a second circuit from the diluate container (**V$_D$**) through the diluate chambers (**Di1,Di2**) in the first electrodialysis arrangement (**E1**) and in the second electrodialysis arrangement (**E2**) and from there again.

12. Apparatus according to one of claims 7 to 11, **characterised in that** the first electrodialysis arrangement (**E1**) and the second electrodialysis arrangement (**E2**) are combined in a common electrodialysis stack and are so disposed that only one cathode (**Ka**) is disposed at one end face of the common electrodialysis stack, and only one anode (**An**) is disposed at the other end face thereof.

13. Apparatus according to one of claims 7 to 11, **characterised in that** the first electrodialysis arrangement (**E1**) and the second electrodialysis arrangement (**E2**) are combined in a common electrodialysis stack and are so disposed

   a. that a common cathode (**Ka**) is disposed between the two electrodialysis arrangements, and a respective

anode (**An₁**,**An₂**) is disposed at each of the two end faces of the common electrodialysis stack, or
b. that a common anode (**An**) is disposed between the two electrodialysis arrangements, and a respective cathode (**Ka**) is disposed at each of the two end faces of the common electrodialysis stack.

**Revendications**

1. Procédé de régénération électrodialytique d'un bain de séparation des métaux autocatalytique contenant des ions d'hypophosphite servant d'agent de réduction avec lequel le liquide du bain est conduit à travers des compartiments de produits dilués (**Di1a, Di1b, ..., Di1x**) dans un premier dispositif d'électrodialyse (**E1**) présentant des cathodes (**Ka**) et des anodes (**An**) qui sont séparées des compartiments de produits concentrés (**Ko1a, Ko1b, ..., Ko1x**) dans le dispositif d'électrodialyse (**E1**) du côté des cathodes par des membranes échangeuses de cations monosélectives (**KS**) et du côté des anodes par des membranes échangeuses d'anions (**A**), les compartiments de produits dilués (**Di1a, Di1b, ..., Di1x**) et les compartiments de produits concentrés (**Ko1a, Ko1b, ..., Ko1x**) étant intercalés,
**caractérisé par le fait que** le liquide du bain est conduit en même temps à travers les compartiments de produits dilués (**Di2a, Di2b,...Di2x**) dans un deuxième dispositif d'électrodialyse (**E2**) présentant des cathodes (**Ka**) et des anodes (**An, An2**) qui sont séparées des compartiments de produits concentrés (**Ko2a, Ko2b, ..., Ko2x**) dans le deuxième dispositif d'électrodialyse (**E2**) du côté des cathodes par des membranes échangeuses d'anions monosélectives (**AS**) et du côté des anodes par des membranes échangeuses d'anions (**A**), les compartiments de produits dilués (**Di2a, Di2b, ..., Di2x**) et les compartiments de produits concentrés (**Ko2a, Ko2b, ..., Ko2x**) étant intercalés dans le deuxième dispositif d'électrodialyse (**E2**).

2. Procédé conforme à la revendication 1 **caractérisé par le fait qu'**une solution de concentré est en même temps conduite à travers les compartiments de produits concentrés (**Ko2a, Ko2b,..., Ko2x**).

3. Procédé conforme à l'une des revendications précédentes **caractérisé par le fait que** le premier dispositif d'électrodialyse (**E1**) et le deuxième dispositif d'électrodialyse (**E2**) sont réunis dans un empilement d'électrodialyse commun et sont disposés de sorte qu'une cathode (**Ka**) soit simplement placée à une extrémité de l'empilement d'électrodialyse commun et qu'une anode (**An**) soit placée à l'autre extrémité.

4. Procédé conforme à l'une des revendications 1 et 2 **caractérisé par le fait que** le premier dispositif d'électrodialyse (**E1**) et le deuxième dispositif d'électrodialyse (**E2**) sont réunis dans un empilement d'électrodialyse commun et sont disposés de sorte que

   a. une cathode commune (**Ka**) soit disposée entre les deux dispositifs d'électrodialyse (**E1**, **E2**) et qu'une anode (**An1**, **An2**) soit placée à chacune des deux extrémités de l'empilement d'électrodialyse commun (**E1, E2**) ou que
   b. une anode commune (**An**) soit disposée entre les deux dispositifs d'électrodialyse (**E1, E2**) et qu'une cathode (**Ka**) soit placée à chacune des deux extrémités de l'empilement d'électrodialyse commun (**E1, E2**).

5. Procédé conforme à l'une des précédentes revendications **caractérisé par le fait que** le liquide du bain de séparation des métaux est conduit dans un premier cycle à travers un réservoir de produits dilués (**V$_D$**) et que le liquide contenu dans le réservoir de produits dilués (**V$_D$**) est conduit dans un deuxième cycle à travers les compartiments de produits dilués (**Di1a, Di1b, ... Di1x, Di2a, Di2b, ... Di2x**) dans le premier et le deuxième dispositif d'électrodialyse (**E1, E2**), le débit étant supérieur dans le deuxième cycle d'au moins un ordre de grandeur, de préférence d'au moins deux ordres de grandeur au débit dans le premier cycle.

6. Procédé de régénération électrodialytique d'un bain de séparation de nickel autocatalytique, contenant des ions d'hypophosphite servant d'agent de réduction conforme à l'une des précédentes revendications.

7. Système de régénération électrodialytique d'un bain de séparation de métaux autocatalytique, contenant des ions d'hypophosphite servant d'agent de réduction, contenant

   a. un premier dispositif d'électrodialyse (**E1**), contenant deux compartiments de produits concentrés (**Ko1a, Ko1b**) et un compartiment de produits dilués (**Di1a**) intercalé, servant de compartiments électrolytiques, le compartiment de produits dilués (**Di1a**) étant séparé du côté des cathodes de l'un des compartiments de produit concentré (**Ko1b**) par une membrane échangeuse de cations (**KS**) monosélective et du côté des anodes de l'autre compartiment de produit concentré (**Ko1a**) par une membrane échangeuse d'anions (**A**),
b. dans le premier dispositif d'électrodialyse (**E1**) au moins une cathode (**Ka**) et au moins une anode (**An**) et
c. une alimentation de courant (**S**) pour les cathodes (**Ka**) et les anodes (**An, An1**),
**caractérisé par**
d. un deuxième dispositif d'électrodialyse (**E2**) contenant deux compartiments de produits dilués (**Di2a, Di2b**) et un compartiment de produits concentrés (**Ko2a**) intercalé, servant de compartiments électrolytiques, le compartiment de produits concentrés (**Ko2a**) étant séparé du côté des cathodes de l'un des compartiments de produits dilués (**Di2a**) par une membrane échangeuse d'anions monosélective (**A**) et du côté des anodes de l'autre compartiment de produits dilués (**Di2b**) par une membrane échangeuse d'anions monosélective (**AS**), et caractérisé également par une cathode (**Ka**) au moins et une anode (**An, An2**) au moins et une alimentation en courant (**S**) pour les cathodes et les anodes.

8. Système conforme à la revendication 7, **caractérisé par le fait que** respectivement au moins deux compartiments de produits dilués (**Di1a, Di1b**) et au moins trois compartiments de produits concentrés (**Ko1a, Ko1b, Ko1c**) sont intercalés dans le premier dispositif d'électrodialyse (**E1**) et qu'au moins deux compartiments de produits concentrés (**Ko2a, Ko2b**) et au moins trois compartiments de produits dilués (**Di2a, Di2b, Di2c**) sont intercalés dans le deuxième dispositif d'électrodialyse (**E2**).

9. Système conforme à l'une des revendications 7 et 8 **caractérisé par le fait que** les compartiments de produits concentrés (**Ko1a, Ko1b, Ko1x**) sont délimités dans le premier dispositif d'électrodialyse (**E1**) du côté des cathodes par les membranes échangeuses d'anions (**A**) et du côté des anodes par les membranes échangeuses de cations monosélectives (**KS**), dans la mesure où les compartiments électrolytiques (**KR1, AR1**) en contact avec les cathodes (**Ka**) ou les anodes (**An, An1**) sont séparés des compartiments électrolytiques voisins par des membranes échangeuses de cations (**K**).

10. Système conforme à l'une des revendications 7 à 9 **caractérisé par le fait que** les compartiments de produits concentrés (**Ko2a, Ko2b,... Ko2x**) sont délimités dans le deuxième dispositif d'électrodialyse (**E2**) du coté des cathodes par les membranes échangeuses d'anions (**A**) et du côté des anodes par les membranes échangeuses d'anions monosélectives (**AS**) dans la mesure où les compartiments électrolytiques (**KR2, AR2**) en contact avec les cathodes (**Ka**) ou les anodes (**An1, An2**) sont séparés des compartiments électrolytiques voisins par des membranes échangeuses de cations (**K**).

11. Système conforme à l'une des revendications de 7 à 10, **caractérisé par le fait qu'il** est prévu des premiers moyens de guider le liquide (**R1, R2**) avec lesquels le liquide du bain peut être conduit dans un premier cycle à travers un réservoir de produits dilués (**V**$_D$) et qu'également des seconds moyens de guider le liquide (**R3, R4**) avec lesquels le liquide peut être conduit dans un deuxième cycle du réservoir de produit dilué (**V**$_D$) à travers les compartiments de produits dilués (**Di1, Di2**) dans le premier (**E1**) et le deuxième (**E2**) dispositif d'électrodialyse et ramené de là.

12. Système conforme à l'une des revendications de 7 à 11, **caractérisé par le fait que** le premier dispositif d'électrodialyse (**E1**) et le deuxième dispositif d'électrodialyse (**E2**) sont réunis dans un empilement d'électrodialyse commun et disposés de sorte qu'une cathode (**Ka**) soit placée simplement à l'extrémité de l'empilement d'électrodialyse commun et qu'une anode (**An**) soit placée à l'autre extrémité.

13. Système conforme à l'une des revendications de 7 à 11, **caractérisé par le fait que** le premier dispositif d'électrodialyse (**E1**) et le deuxième dispositif d'électrodialyse (**E2**) sont réunis dans un empilement d'électrodialyse commun et disposés de sorte que

a. une cathode commune (**Ka**) soit disposée entre les deux dispositifs d'électrodialyse et qu'une anode (**An1, An2**) soit placée à chacune des deux extrémités de l'empilement d'électrodialyse commun ou que
b. une anode commune (**An**) soit disposée entre les deux dispositifs d'électrodialyse et qu'une cathode (**Ka**) soit placée à chacune des deux extrémités de l'empilement d'électrodialyse commun.

**Fig. 1**

Fig. 2

EP 1 123 424 B1

Fig. 3